# FASCICULE DE BREVET EUROPEEN

(11) **EP 1 061 817 B1**
(45) Date de publication et mention de la délivrance du brevet: **08.12.2004**
(21) Numéro de dépôt: 99914517.0
(22) Date de dépôt: 12.03.1999
(51) Int. Cl.: A23L 1/00, A23P 1/04, A23L 1/035, A23L 1/22

(54) **COMPOSITION ALIMENTAIRE CONTENANT UNE PHASE MESOMORPHE DE MONOGLYCERIDE**
NAHRUNGSMITTEL ENTHALTEND EINE MESOMORPHE PHASE AUS MONOGLYCERIDEN
FOOD COMPOSITION CONTAINING A MONOGLYCERIDE MESOMORPHIC PHASE

(30) Priorité: 13.03.1998 EP 98104598
(43) Date de publication de la demande: 27.12.2000
(73) Titulaire: SOCIETE DES PRODUITS NESTLE S.A., 1800 Vevey (CH)
(72) Inventeur: LESER, Martin, CH-1054 Morrens (CH); VAUTHEY, Sylvain, CH-1110 Morges (CH)
(74) Mandataire: Thomas, Alain
(86) Numéro de dépôt international: PCT/EP1999/001631
(87) Numéro de publication internationale: WO 1999/047004

(56) Documents cités:
- EP-A- 0 547 647
- EP-A- 0 664 083
- WO-A-84/02076
- WO-A-92/09209
- WO-A-93/06921
- FR-A- 2 735 658
- NL-A- 8 402 867
- US-A- 4 226 890
- BOYLE E: "MONOGLYCERIDES IN FOOD SYSTEMS: CURRENT AND FUTURE USES" FOOD TECHNOLOGY, vol. 51, no. 8, 1 août 1997, pages 52-54, 56, 58/59, XP000697936

## Description

La présente invention concerne une composition alimentaire comprenant au moins un ingrédient alimentaire et contenant un monoglycéride, ainsi que le procédé pour obtenir ladite composition.

Les émulsifiants, comme les monoglycérides ont une structure moléculaire amphiphile. Ceci signifie qu'ils ont une partie de la molécule qui est hydrophile et l'autre partie de la molécule qui est lipophile. En raison de ce caractère amphiphile, les monoglycérides forment spontanément des agrégats si on les met dans une solution ou en dispersion aqueuse. Différents types d'agrégats peuvent être formés : ceci dépend de la structure moléculaire dudit monoglycéride dans l'eau. On peut ainsi avoir soit des micelles, soit une phase liquide cristalline, comme une phase cubique, lamellaire ou hexagonale, ou finalement une phase cristalline. Toutes ces structures sont à même d'incorporer ou de solubiliser des molécules hôtes. En raison du caractère amphiphile des monoglycérides conduisant à la formation d'agrégats, on peut aussi bien solubiliser des molécules hôtes hydrophiles que lipophiles. Le degré de solubilisation dépend de la structure moléculaire du monoglycéride et de la molécule hôte.

Les demandes de brevet WO 92/09209, EP 664083 et EP 547647 mentionnent l'utilisation de phases liquides cristallines dans le domaine alimentaire. Ces trois inventions se trouvent être relativement similaires puisqu'elles décrivent la possibilité d'utiliser de telles phases comme agent structurant de composant alimentaire à basse teneur en graisse. Dans cette optique, les auteurs ont plus particulièrement portés leur intérêt sur les phases dénommées coagel ou lamellaire. Il est connu que de nombreux tensio-actifs forment de tels arrangements moléculaires lorsqu'on les dispersent dans l'eau et ceci sur une large gamme de température et de composition. De ce fait, dans ces brevets il n'y a qu'une faible limitation concernant le choix de l'émulsifiant. Les brevets US 4226890 et FR 2735658 concernent des compositions à usage alimentaire dans lesquels les composés alimentaires sont encapsulés dans au moins un émulsifiant : dans ce cas, les structures obtenues sont des structures lamellaires. Finalement, l'article de E. Boyle paru dans Food technology sous le titre Monoglycerides in Food Systems : Current and futur uses, mentionne bien des encapsulations dans le domaine alimentaire avec des structures cubiques, mais les monoglycérides utilisée sont décrits en termes très généraux.

Des études ont déjà été effectuées sur l'utilisation de réseaux cubiques pour encapsuler des composés biologiquement actifs, c'est-à-dire des composés qui réagissent ou affectent des cellules et des organismes vivants, comme la lidocaïne, la gramicidine, l'insuline, le BSA, ou des vitamines E et d'autres applications en pharmacie, en médecine ou en cosmétique. Les demandes de brevet WO 93/06921 et WO 84/02076 mentionnent des utilisations dans le domaine de la médecine : le but est d'encapsuler un principe actif de manière à contrôler sa libération. L'inconvénient de ces applications est que le monoglycéride utilisé est très riche en monooléine, à savoir il en contient plus de 90 %, et de ce fait ceci renchérit le coût et nécessite un procédé d'utilisation plus sophistiqué. Comme dans le domaine de la médecine, on a des produits à forte valeur ajoutée, c'est supportable et acceptable. Par contre, dans le domaine de l'alimentaire, cela n'est guère acceptable.

Le but de la présente invention est de bénéficier également de la possibilité d'avoir une structure cubique ou hexagonale qui permet de faire des encapsulations de produits alimentaires avec des monoglycérides , de manière à contrôler la libération dudit produit alimentaire. Selon la présente invention, d'une part on arrive à un résultat avec un procédé de mise en oeuvre peu cher et simple et d'autre part on peut utiliser des monoglycérides disponibles dans le commerce, donc également bon marché.

La présente invention concerne une composition alimentaire comprenant au moins un ingrédient alimentaire et se présentant sous la forme aqueuse ou sous la forme de poudre instantanée, contenant un monoglycéride, ledit monoglycéride étant choisi dans le groupe constitué par a) un monoglycérol monoester comprenant entre 60 et 90 % de monooléine C18:1, le reste étant de la monolinoléine en C18:2 et/ou un monoglycérol monoester saturé; ou b) un monoglycérol monoester comprenant entre 60 et 90 % de monolinoléine C18:2, le reste étant de la monooléine C18:1 et/ou un monoglycérol monoester saturé, ladite composition présentant en phase aqueuse une structure cubique ou hexagonale encapsulant ou associant ledit ingrédient alimentaire. La teneur en composés insaturés du monoglycérol monoester est rapportée aux seuls composés insaturés. La teneur en composés insaturés est normalement d'un maximum de 90 %.

Par encapsulant dans la présente description, on entend que l'ingrédient alimentaire est solubilisé dans la structure mésomorphe du monoglycéride. Par associant dans la présente description, on entend que l'ingrédient alimentaire est adsorbé à la surface de la structure mésomorphe du monoglycéride.

Le monoglycéride utilisé selon l'invention permet de créer une grande région cubique.

Le monoglycérol monoester utilisé selon l'invention contient normalement entre 0 et 30 % de composés saturés.

Ce monoglycérol monoester est enrichi en composés insaturés avec jusqu'à 30 % de monooléine et jusqu'à 80 % de monolinoléine. Le monoglycérol monoester peut être utilisé seul ou en mélange avec un dérivé de monoglycéride ou un autre émulsifiant compatibles dans le domaine alimentaire, choisi dans le groupe constitué par un ester de l'acide tartrique, un ester de l'acide citrique, un ester de sucrose,un phospholipide, un ester de polyglycérol, un ester de propylène glycol et le stearoyl lactilate de sodium. Ces composés peuvent être utilisés dans une quantité telle qu'ils maintiennent la structure cubique, lamellaire ou hexagonale c'est-à-dire l'encapsulation de l'ingrédient alimentaire induit par le monoglycéride.

Il est également possible selon l'invention d'utiliser comme monoglycéride un di- ou polyglycérol monoester saturé ou insaturé : mais il faut dans ce cas, pour obtenir la structure mésomorphe souhaitée faire un mélange avec un di- ou polyglycérol di- ou polyester ou un autre émulsifiant alimentaire. Cet émulsifiant alimentaire est le même que celui mentionné ci-dessus, à savoir il est choisi dans le groupe constitué par un ester de l'acide tartrique, un ester de l'acide citrique, un ester de sucrose,un phospholipide, un ester de polyglycérol, un ester de propylène glycol et le stearoyl lactilate de sodium.

Le but de la présente invention est de solubiliser des ingrédients alimentaires dans des agrégats de monoglycéride, tels que des phases cristallines liquides (cubique ou hexagonale) de manière à obtenir une libération contrôlée ou un effet de stabilisation chimique (par exemple stabilisation contre l'oxydation) des ingrédients solubilisés. L'ingrédient utilisé est choisi dans le groupe constitué par un assaisonnement, un arôme, un sel, un sucre, un oligosaccharide, un amino-acide, un peptide, une protéine, une enzyme, un polysaccharide et un arôme de café. Par assaisonnement, on entend tout produit alimentaire donnant de la flaveur.

L'agent solubilisant selon l'invention est un monoglycéride ou un mélange de ce monoglycéride avec un autre émulsifiant alimentaire, qui donne une phase cubique, lorsqu'il est mis en contact avec de l'eau ou un autre solvant acceptable dans le domaine alimentaire, comme le glycérol ou l'éthanol. On utilise de préférence un monoglycéride du commerce, comme celui vendu par la Société DANISCO sous la marque DIMODAN LS.

Par composition alimentaire, on entend tout type de composition comprenant lesdits ingrédients alimentaires, seuls ou en mélange.

La composition selon l'invention peut soit être utilisée en tant que telle, soit être une composition intermédiaire qu'on ajoute pour en faire un produit fini.

Si on en fait un produit intermédiaire, on peut par exemple envisager une encapsulation d'arôme qu'on incorpore ensuite dans une soupe deshydratée. Dans ce cas, la teneur en ingrédient alimentaire peut aller jusqu'à 50 % du monoglycéride. Ledit arôme encapsulé étant présent à raison de 1 à 5 % dans la soupe deshydratée.

Dans la présente description tous les pourcentages sont donnés en poids.

Dans le cas normal, la composition selon l'invention est utilisée en tant que telle. Dans une forme de réalisation, on dispose d'une composition à forte teneur en eau, par exemple une boisson prête à boire. Dans ce cas, on a une teneur en eau comprise entre 80 et 99,8 %, une teneur en matière sèche comprise entre 0,2 et 20 % et une teneur en monoglycéride comprise entre 0,1 et 2 %. Les proportions sont données par rapport à la composition totale. La matière séche est alors soit de l'extrait sec de café, soit de l'extrait de thé ou du cacao ou tout autre extrait pour faire une boisson froide ou chaude. Dans ce cas, la présence de monoglycéride peut permettre et de contrôler la libération de l'arôme en bouche et de stabiliser les composants aromatiques de la boisson considérée.

Il est également possible selon l'invention de préparer une composition alimentaire ayant une teneur en matière sèche plus élevée, par exemple comprise entre 40 et 50 %. Dans ce cas, la teneur en monoglycéride est comprise entre 0,1 et 2 %, calculé sur la composition totale.

Selon une autre forme de réalisation de la composition selon la présente invention, celle-ci se présente sous la forme de poudre instantanée, contenant entre 0,1 et 4 % de monoglycéride. Ce mode de réalisation peut être très approprié pour faire de la poudre de café, de la poudre de thé, de la poudre de cacao et autres. L'encapsulation avec les monoglycérides permet lors de la reconstitution de cette poudre dans l'eau de différer la libération de certains arômes spécifiques dudit ingrédient alimentaire.

On a constaté lors des essais effectués, que la structure cristalline qui permettait d'obtenir la meilleure libération retardée était la structure cubique. On peut également obtenir de bons résultats avec des structures lamellaires et hexagonales. Les mesures de mise en évidence de la structure sont faites avec un microscope à lumière polarisée.

Dans certains modes de réalisation , par exemple dans le cas d'une composition à forte teneur en eau, il est indispensable d'ajouter dans ladite composition un agent de stabilisation pour stabiliser la phase cristalline cubique. Cet agent est choisi dans le groupe de composés tels que l'amidon, l'amidon modifié, les protéines du lait, les protéines du soja, les hydrocolloïdes tensioactifs, comme la gomme de guar, la gomme de caroube et d'autres émulsifiants à faible poids moléculaire, comme la lysolécithine, les esters de sucrose et autres. La quantité des ces agents stabilisants est alors de l'ordre de 0,1 à 5 %.

Dans la présente description, toutes les proportions sont données par rapport à la composition finale.

Les mesures de libération contrôlée des arômes volatiles sont faites par chromatographie en phase gazeuse ou par un nez électronique.

Comme exemples possibles d' assaisonnements utilisables, on peut citer les composés suivants : diacéthyl, furfural, guaiacol, limonène, pyrazine de méthyle et vanilline. Ces composés sont utilisés dans une teneur comprise entre 1,5 et 5 %.

L'invention concerne également le procédé d'obtention de la composition selon l'invention, dans lequel on mélange l'ingrédient alimentaire avec la monoglycéride et on y ajoute la quantité d'eau souhaitée, de manière à former la structure cubique, lamellaire ou hexagonale et ledit ingrédient est ajouté au reste de la composition.Ce procédé dépend quant à sa mise en oeuvre du monoglycéride utilisé. En effet, selon la teneur en monooléine du monoglycéride, on formera en mélange avec l'eau une composition plus ou moins visqueuse, que l'on pourra donc plus ou moins bien travailler à température ambiante. Sinon, il faudra envisager une incorporation du composé alimentaire à température plus élévée. La seule condition dans ce cas, est de traiter un composé alimentaire qui n'est pas sensible à la chaleur. Si on veut encapsuler un produit alimentaire sensible à la chaleur, la seule possibilité reste alors le traitement proche de la température ambiante.

Le procédé selon l'invention consiste à mélanger à température ambiante l'ingrédient alimentaire avec de l'eau, de manière à obtenir un mélange ayant une teneur en eau comprise entre 20 et 45 %, et on l'ajoute au reste de la composition. L'ingrédient alimentaire est ajouté au monoglycéride liquide, et on y ajoute alors la quantité d'eau nécessaire,qui peut aussi contenir un autre ingrédient alimentaire. Le monoglycéride prend l'eau et la phase liquide cristalline, dans laquelle le composé alimentaire est solubilisé, est formée. Cela signifie que les particules chargées sont formées in situ. L'application d'une énergie mécanique (comme une légère agitation ou une homogénéisation) fragmente la phase cristalline liquide en petites particules. Les agrégats sont stabilisés à l'égard de la flocculation à l'aide d'un agent de stabilisation qui est présent dans la phase aqueuse.

Dans un second mode de réalisation du procédé selon l'invention, on travaille également à température ambiante, à savoir on mélange l'ingrédient alimentaire en phase aqueuse avec le monoglycéride, et on ajoute ce mélange au reste de la composition de manière à obtenir une composition comprenant principalement de l'eau, de manière à former in-situ la phase cubique, lamellaire ou hexagonale et on effectue un remplissage aseptique, de manière à obtenir une boisson prête à l'emploi. Dans ce cas là aussi, comme mentionné ci-dessus, il faut ajouter un agent de stabilisation.

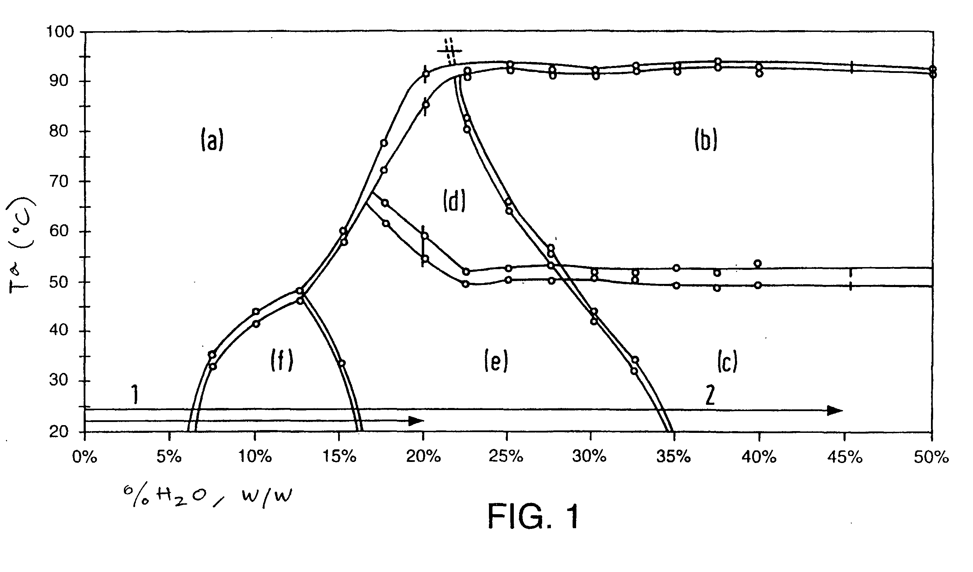

La suite de la description est faite en référence à là figure unique qui donne le diagramme de phase avec un monoglycérol monoester spécifique.

Pour ce diagramme, on prend un monoglycérol monoester contenant 10,6 % de composés saturés, 21,3 % de composés en C18 avec une seule insaturation et 66,8 % de composés en C18 avec deux insaturations. L'abscisse donne la teneur croissante en eau et l'ordonnée la température en °C. Si on mélange le monoglycéride à température ambiante avec l'eau, on a d'abord la zone de micro-émulsion (a), ensuite avec 10 à 15 % d'eau, on tombe sur une phase liquide lamellaire (f), puis avec la teneur en eau entre 20 et 30 % une phase cubique (e) et finalement une phase (c) en équilibre avec de l'eau et la phase cubique. Si on faisait le mélange à une température de l'ordre de 70 °C, on arrive avec un mélange contenant 20 % d'eau à une structure hexagonale (d) et si on augmente encore la teneur en eau à un équilibre (b) entre de l'eau et la phase hexagonale. Ce qu'on vise dans la composition selon l'invention c'est de se situer dans les zones (e) ou (c).

Sur la figure, si on considère les flèches 1 et 2, on est dans le premier mode de réalisation du procédé selon l'invention. La suite de la description est faite en référence aux exemples.

### Exemple 1

On forme une phase cristalline liquide cubique en mélangeant 7 g du monoglycéride de la même composition que celui utilisé pour faire le diagramme de phase de la figure, contenant 10 mg d'un arôme pur avec 3 g d'eau, le tout porté à une température de 90 °C. Le mélange est vigoureusement agité à 90 °C pendant quelques secondes et ensuite refroidi à la température ambiante. La phase cubique est ainsi formée. La libération d'arôme de la phase cubique a été étudiée avec un système de détection gazeuse, dans lequel il apparaît que la libération dudit arôme est réduite si on la compare avec un arôme non traité.

### Exemple 2

On mélange 2 g du monoglycéride de l'exemple 1 contenant 100 mg d'arôme avec 100 ml d'une phase aqueuse contenant 20 g d'amidon modifié. On chauffe le mélange à 90 °C, on homogénéise, et on refroidit. On obtient une phase cubique ayant des tailles de particules de l'ordre de 50 microns. La libération de l'arôme solubilisé est mesurée dans l'espace de tête par chromatographie en phase gazeuse. On constate un profil de libération modifié.

### Exemple 3

Une dispersion de particules cubiques contenant un mélange d'arôme de café est formée en mélangeant 0,5 g du monoglycéride de l'exemple 1 (qui contient 100 mg d'un mélange spécial d'arôme de café) avec 100 g d'une liqueur d'extrait de café à température ambiante. La liqueur de café ainsi obtenue est séchée par pulvérisation ou par lyophilisation pour obtenir une poudre. On obtient après reconstitution de cette poudre traitée une libération plus contrôlée de l'arôme et du goût en réduisant la cinétique de libération, si on la compare à une poudre reconstituée ne contenant pas le monoglycéride.

### Exemple 4

On prépare une dispersion de particules cubiques en mélangeant 0,1 g du monoglycéride de l'exemple 1 dans 100 g de liqueur de café contenant 100 mg d'un mélange d'arôme de café. Ensuite, la liqueur de café est séchée par pulvérisation ou par lyophilisation.

### Exemple 5

2 g du monoglycéride de l'exemple 1 contenant de l'arôme de café sont dispersés dans 100 ml d'une solution aqueuse contenant 20 % de poudre de lait écrémé et on homogénéise le mélange à 70 °C. Ensuite, on ajoute 10 à 20 % de cette dispersion à une boisson de café prête à boire.

### Exemple 6

Une dispersion de particules cubiques contenant des arômes comme décrit dans l'exemple 2 est lyophilisée ou séchée par pulvérisation et ajoutée dans une soupe lyophilisée.

## Revendications

1. Composition alimentaire comprenant au moins un ingrédient alimentaire et se présentant sous la forme aqueuse ou sous la forme de poudre instantanée, **caractérisée en ce qu'**elle contient un monoglycéride, ledit monoglycéride étant choisi dans le groupe constitué par a) un monoglycérol monoester comprenant entre 60 et 90 % de monooléine C18:1, le reste étant de la monolinoléine en C18:2 et/ou un monoglycérol monoester saturé; ou b) un monoglycérol monoester comprenant entre 60 et 90 % de monolinoléine C18:2, le reste étant de la monooléine C18:1 et/ou un monoglycérol monoester saturé, ladite composition présentant en phase aqueuse une structure cubique ou hexagonale encapsulant ou associant ledit ingrédient alimentaire.

2. Composition alimentaire selon la revendication 1 , **caractérisée en ce que** en plus du monoglycérol monoester elle contient au moins un dérivé de monoglycéride ou un autre émulsifiant alimentaire , choisi dans le groupe constitué par un ester de l'acide tartrique, un ester de l'acide citrique, un ester de sucrose, un phospholipide, un ester de polyglycérol, un ester de propylène glycol et le stearoyl lactilate de sodium.

3. Composition alimentaire selon la revendication 1, **caractérisée en ce que** le di- ou polyglycérol monoester saturé ou insaturé contient un émulsifiant alimentaire choisi dans le groupe constitué par un ester de l'acide tartrique, un ester de l'acide citrique, un ester de sucrose, un phospholipide, un ester de polyglycérol, un ester de propylène glycol et le stearoyl lactilate de sodium.

4. Composition alimentaire selon l'une des revendications 1 à 3, **caractérisée en ce qu'**elle contient un agent de stabilisation, choisi dans le groupe constitué par l'amidon, l'amidon modifié, les protéines du lait, les protéines du soja, les hydrocolloides tensioactifs, comme la gomme de guar, le gomme de caroube.

5. Composition alimentaire selon l'une des revendications 1 à 4, **caractérisé en ce que** l' ingrédient alimentaire est choisi dans le groupe constitué par un assaisonnement, un arôme, un sel, un sucre, un oligosaccharide, un amino-acide, un peptide, une protéine, une enzyme, un polysaccharide, un arôme de café et leur mélange.

6. Composition alimentaire selon l'une des revendications 1 à 5 se présentant sous forme aqueuse, **caractérisé en ce qu'**elle a une teneur en matière sèche comprise entre 0,2 et 20 % et **en ce qu'**elle contient entre 0,1 et 2 % de monoglycéride, calculé sur la composition totale.

7. Composition alimentaire selon l'une des revendications 1 à 5 se présentant sous forme aqueuse,**caractérisé en ce qu'**elle a une teneur en matière sèche comprise entre 40 et 50 % et une teneur en monoglycéride comprise entre 0,1 et 2 % , calculé sur la composition totale.

8. Composition alimentaire selon l'une des revendications 1 à 5 se présentant sous forme de poudre instantanée, **caractérisée en ce qu'**elle contient 0,1 et 4 % de monoglycéride.

9. Composition selon l'une des revendications 1 à 8, **caractérisé en ce que** le monoglycérol monoester est enrichi en composés insaturés avec jusqu'à 30 % de monooléine et jusqu'à 90 % de monolinoléine, lesdits composés insaturés représentant jusqu'à 90 % de la composition totale dudit monaglycéride.

10. Procédé d'obtention de la composition selon l'une des revendications 1 à 9, **caractérisé en ce qu'**on mélange l'ingrédient alimentaire avec le monoglycéride et on y ajoute la quantité d'eau souhaitée, de manière à former la structure cubique ou hexagonale et ledit ingrédient est ajouté au reste de la composition.

11. Procédé selon la revendication 10, **caractérisé en ce qu'**on mélange à température ambiante l'ingrédient alimentaire avec la monoglycéride et avec l'eau ,de manière à obtenir un mélange ayant une teneur en eau comprise entre 20 et 45 % , et on l'ajoute au reste de la composition.

12. Procédé selon la revendication 10, **caractérisé en ce qu'**on mélange à température ambiante l'ingrédient alimentaire avec le monoglycéride, et on ajoute ce mélange à une composition comprenant principalement de l' eau, de manière à former in-situ la phase cubique ou hexagonale et on effectue un remplissage aseptique, de manière à obtenir une boisson prête à boire.

## Patentansprüche

1. Nahrungsmittelzusammensetzung, die mindestens einen Nahrungsmittelbestandteil enthält und in wässriger Form oder in Instantpulverform vorliegt, **dadurch gekennzeichnet, daß** sie ein Monoglycerid enthält, das aus der Gruppe ausgewählt ist, die besteht aus a) einem Glycerinmonoester, der zwischen 60 und 90 % Monooleat C18:1 und den Rest Monolinoleat C18:2 und/oder gesättigten Glycerinmonoester enthält; oder b) einem Glycerinmonoester, der zwischen 60 und 90 % Monolinoleat C18:2 und Rest Monooleat C18:1 und/oder gesättigten Glycerinmonoester enthält, wobei diese Zusammensetzung in der wässrigen Phase eine kubische oder hexagonale Struktur besitzt, in der der Nahrungsmittelbestandteil verkapselt ist oder mit der dieser assoziiert ist.

2. Nahrungsmittelzusammensetzung nach Anspruch 1, **dadurch gekennzeichnet, daß** sie zusätzlich zu dem Glycerinmonoester mindestens ein Monoglyceridderivat oder einen anderen Nahrungsmittelemulgator enthält, der aus der Gruppe ausgewählt ist, die aus Weinsäureester, Zitronensäureester, Sucroseester, einem Phospholipid, Polyglycerinester, Propylenglycolester und Natriumstearoyllactylat besteht.

3. Nahrungsmittelzusammensetzung nach Anspruch 1, **dadurch gekennzeichnet, daß** der gesättigte oder ungesättigte Di- oder Polyglycerinmonoester einen Nahrungsmittelemulgator enthält, der aus der Gruppe ausgewählt ist, die aus Weinsäureester, Zitronensäureester, Sucroseester, einem Phospholipid, Polyglycerinester, Propylenglycolester und Natriumstearoyllactylat besteht.

4. Nahrungsmittelzusammensetzung nach einem der Ansprüche 1 bis 3, **dadurch gekennzeichnet, daß** sie einen Stabilisator enthält, der aus der Gruppe ausgewählt ist, die aus Stärke, modifizierter Stärke, Milchproteinen, Sojaproteinen, oberflächenaktiven Hydrocolloiden, wie Guargummi oder Johannisbrotgummi, besteht.

5. Nahrungsmittelzusammensetzung nach einem der Ansprüche 1 bis 4, **dadurch gekennzeichnet, daß** der Nahrungsmittelbestandteil aus der Gruppe ausgewählt ist, die aus Würze, Aroma, Salz, Zucker, Oligosaccharid, Aminosäure, Peptid, Protein, Enzym, Polysaccharid, Kaffeearoma und ihren Mischungen besteht.

6. Nahrungsmittelzusammensetzung nach einem der Ansprüche 1 bis 5 in wässriger Form, **dadurch gekennzeichnet, daß** sie einen Trockenmassegehalt zwischen 0,2 und 20 % besitzt und daß sie zwischen 0,1 und 2 % Monoglycerid, bezogen auf die Gesamtzusammensetzung, enthält.

7. Nahrungsmittelzusammensetzung nach einem der Ansprüche 1 bis 5, in wässriger Form, **dadurch gekennzeichnet, daß** sie einen Trockenmassegehalt zwischen 40 und 50 % und einen Monoglyceridgehalt zwischen 0,1 und 2 %, bezogen auf die Gesamtzusammensetzung, enthält.

8. Nahrungsmittelzusammensetzung nach einem der Ansprüche 1 bis 5 in Form von Instantpulver, **dadurch gekennzeichnet, daß** sie zwischen 0,1 und 4 % Monoglycerid enthält.

9. Zusammensetzung nach einem der Ansprüche 1 bis 8, **dadurch gekennzeichnet, daß** der Glycerinmonoester bezüglich ungesättigter Verbindungen mit bis zu 30 % Monooleat und bis zu 90 % Monolinoleat angereichert ist, wobei diese ungesättigten Verbindungen bis zu 90 % der Gesamtzusammensetzung des Monoglycerids ausmachen.

10. Verfahren zur Herstellung der Verbindung nach einem der Ansprüche 1 bis 9, **dadurch gekennzeichnet, daß** man den Nahrungsmittelbestandteil mit dem Monoglycerid mischt und die gewünschte Menge Wasser zusetzt, so daß die kubische oder hexagonale Struktur gebildet wird, und dieser Bestandteil dem Rest der Zusammensetzung zugesetzt wird.

11. Verfahren nach Anspruch 10, **dadurch gekennzeichnet, daß** man bei Raumtemperatur den Nahrungsmittelbestandteil mit dem Monoglycerid und mit Wasser so mischt, daß man eine Mischung mit einem Wassergehalt zwischen 20 und 45 % erhält, und diese dem Rest der Zusammensetzung zusetzt.

12. Verfahren nach Anspruch 10, **dadurch gekennzeichnet, daß** man bei Raumtemperatur den Nahrungsmittelbestandteil mit dem Monoglycerid mischt und diese Mischung einer Zusammensetzung zusetzt, die hauptsächlich aus Wasser besteht, so daß in-situ die kubische oder hexagonale Phase gebildet wird, und man eine keimfreie Abfüllung so vornimmt, daß man ein trinkfertiges Getränk erhält.

## Claims

1. A food composition comprising at least one food ingredient and assuming aqueous or instant powder form, **characterised in that** it contains a monoglyceride, said monoglyceride being selected from the group consisting of a) a monoglycerol monoester comprising between 60 and 90% C18:1 monoolein, the remainder being C18:2 monolinolein and/or a saturated monoglycerol monoester; or b) a monoglycerol monoester comprising between 60 and 90% C18:2 monolinolein, the remainder being C18:1 monoolein and/or a saturated monoglycerol monoester, said composition exhibiting in the aqueous phase a cubic or hexagonal structure encapsulating or associating said food ingredient.

2. A food composition according to claim 1, **characterised in that**, in addition to the monoglycerol monoester, it contains at least one monoglyceride derivative or another food emulsifier selected from the group consisting of a tartaric acid ester, a citric acid ester, a sucrose ester, a phospholipid, a polyglycerol ester, a propylene glycol ester and sodium stearoyl lactilate.

3. A food composition according to claim 1, **characterised in that** the saturated or unsaturated di- or polyglycerol monoester contains a food emulsifier selected from the group consisting of a tartaric acid ester, a citric acid ester, a sucrose ester, a phospholipid, a polyglycerol ester, a propylene glycol ester and sodium stearoyl lactilate.

4. A food composition according to any one of claims 1 to 3, **characterised in that** it contains a stabiliser selected from the group consisting of starch, modified starch, milk proteins, soy proteins, surfactant hydrocolloids, such as guar gum or carob gum.

5. A food composition according to any one of claims 1 to 4, **characterised in that** the food ingredient is selected from the group consisting of a seasoning, a flavour, a salt, a sugar, an oligosaccharide, an amino acid, a peptide, a protein, an enzyme, a polysaccharide, a coffee flavour and the mixture thereof.

6. A food composition according to any one of claims 1 to 5 assuming aqueous form, **characterised in that** it has a dry solids content of between 0.2 and 20% and **in that** it contains between 0.1 and 2% of monoglyceride, calculated relative to the total composition.

7. A food composition according to any one of claims 1 to 5 assuming aqueous form, **characterised in that** it has a dry solids content of between 40 and 50% and a monoglyceride content of between 0.1 and 2%, calculated relative to the total composition.

8. A food composition according to any one of claims 1 to 5 assuming instant powder form, **characterised in that** it contains between 0.1 and 4% of monoglyceride.

9. A composition according to any one of claims 1 to 8, **characterised in that** the monoglycerol monoester is enriched with unsaturated compounds with up to 30% monoolein and up to 90% monolinolein, said unsaturated compounds constituting up to 90% of the total composition of said monoglyceride.

10. A process for obtaining the composition according to any one of claims 1 to 9, **characterised in that** the food ingredient is mixed with the monoglyceride and the desired quantity of water is added so as to form the cubic or hexagonal structure and said ingredient is added to the remainder of the composition.

11. A process according to claim 10, **characterised in that** the food ingredient is mixed with the monoglyceride and the water at ambient temperature so as to obtain a mixture having a water content of between 20 and 45% and it is added to the remainder of the composition.

12. A process according to claim 10, **characterised in that** the food ingredient is mixed with the monoglyceride at ambient temperature and said mixture is added to a composition primarily comprising water so as to form the cubic or hexagonal phase in situ and aseptic filling is performed so as to obtain a ready-to-drink beverage.
